Europäisches Patentamt

European Patent Office

Office européen des brevets

(19)

(11) Numéro de publication : **0 309 351 B1**

# FASCICULE DE BREVET EUROPEEN

(12)

(45) Date de publication du fascicule du brevet :
04.09.91 Bulletin 91/36

(51) Int. Cl.⁵ : **B25J 21/02**, B01L 1/04,
F24F 3/16

(21) Numéro de dépôt : 88402386.2

(22) Date de dépôt : 22.09.88

(54) Installation pour travaux hors poussière.

(30) Priorité : 24.09.87 FR 8713210

(43) Date de publication de la demande :
29.03.89 Bulletin 89/13

(45) Mention de la délivrance du brevet :
04.09.91 Bulletin 91/36

(84) Etats contractants désignés :
BE CH DE ES GB IT LI NL

(56) Documents cités :
EP-A- 0 195 703
FR-A- 1 526 935
FR-A- 2 366 918
US-A- 4 111 753

(73) Titulaire : SOCIETE NOUVELLE
D'EXPLOITATION LA CALHENE
1, rue du Petit Clamart
F-78140 Velizy-Villacoublay (FR)

(72) Inventeur : Picard, Claude
34, rue de Zilina
F-92000 Nanterre (FR)

(74) Mandataire : Mongrédien, André et al
c/o BREVATOME 25, rue de Ponthieu
F-75008 Paris (FR)

# Description

L'invention concerne une installation destinée à effectuer des travaux hors poussière tels que la fabrication et le contrôle des microprocesseurs dans l'industrie électronique et que le remplissage et le bouchage de flacons dans l'industrie pharmaceutique.

Plus précisément, l'invention constitue un perfectionnement à l'installation décrite dans le document FR-A-2578474. Dans ce document, une machine servant à effectuer une opération donnée sur un microprocesseur en cours de fabrication est placée à l'intérieur d'un isolateur parfaitement étanche, équipé d'un circuit ouvert d'admission d'air neuf et de moyens tels qu'un demi-scaphandre permettant d'intervenir à l'intérieur de l'isolateur sans en rompre l'étanchéité. Les produits à traiter (par exemple des plaquettes de silicium) sont introduits dans l'isolateur et évacués de celui-ci par une ouverture d'accès normalement obturée par une porte et sur laquelle on vient raccorder un conteneur de transport ou de transfert étanche. Un circuit fermé de dépoussiérage est également associé à l'isolateur afin d'effectuer un balayage rapide de l'ensemble du volume clos formé dans celui-ci, et notamment de la surface de travail de la machine. Un circuit de dépoussiérage de conception analogue est associé au conteneur de transport ou de transfert.

Dans une telle installation, il est pratiquement impossible d'effectuer un dépoussiérage efficace de la surface de travail de la machine, car le balayage de l'ensemble du volume clos enfermé dans l'isolateur ne permet pas un débit suffisant lorsque le volume de l'isolateur est important. De plus, cette installation n'est pas adaptée à une exploitation industrielle, car rien n'est prévu pour acheminer les objets entre la surface de travail et l'ouverture d'accès, ni pour assurer un dépoussiérage efficace de ces objets au cours de ce trajet.

La présente invention a précisément pour objet une installation pour travaux hors poussière conçue pour être directement utilisable dans l'industrie électronique ou pharmaceutique et permettant de garantir un dépoussiérage efficace des objets traités sur tout le trajet suivi par ces objets à l'intérieur de l'isolateur ainsi que lors de leur déplacement en amont et en aval de cet isolateur.

A cet effet, il est proposé une installation pour travaux hors poussière, comprenant un isolateur pourvu d'une paroi étanche délimitant un volume clos de travail ; des moyens d'intervention à l'intérieur de ce volume sans rupture d'étanchéité de la paroi ; un circuit ouvert d'admission d'air neuf dans l'isolateur, comportant une conduite d'admission d'air équipée de moyens de ventilation et de moyens de filtration et une conduite d'évacuation d'air équipée de moyens de filtration, chacune de ces conduites ayant deux extrémités qui débouchent respectivement dans le volume clos et à l'extérieur de celui-ci ; cette installation étant caractérisée en ce qu'elle comprend de plus un transporteur apte à déplacer des produits selon un trajet donné à l'intérieur de l'isolateur, entre deux ouvertures d'accès formées dans la paroi et normalement obturées de façon étanche par des portes, en passant devant au moins une machine ; au moins un conteneur de transport étanche pourvu d'une ouverture apte à être raccordée de façon étanche sur l'une desdites ouvertures d'accès, et normalement obturée de façon étanche par une porte ; un circuit fermé de recirculation d'air filtré associé à l'isolateur, comportant deux rampes approximativement de même section, disposées en vis-à-vis l'une de l'autre de part et d'autre du transporteur sur toute la longueur dudit trajet, et reliées par une conduite de recirculation équipée d'un surpresseur et de moyens de filtration ; et un circuit fermé de recirculation d'air filtré associé au conteneur, comportant deux autres rampes approximativement de même section, disposées en vis-à-vis l'une de l'autre de part et d'autre d'un volume clos formé à l'intérieur du conteneur, et reliées par une conduite de recirculation équipée d'un surpresseur et de moyens de filtration.

Un mode de réalisation préféré de l'invention va maintenant être décrit, à titre d'exemple nullement limitatif, en se référant aux dessins annexés dans lesquels :

— la figure 1 est une vue de dessus représentant schématiquement et en coupe partielle une installation pour travaux hors poussière conforme à l'invention ; et

— la figure 2 est une vue de côté, en coupe selon la ligne II-II de la figure 1.

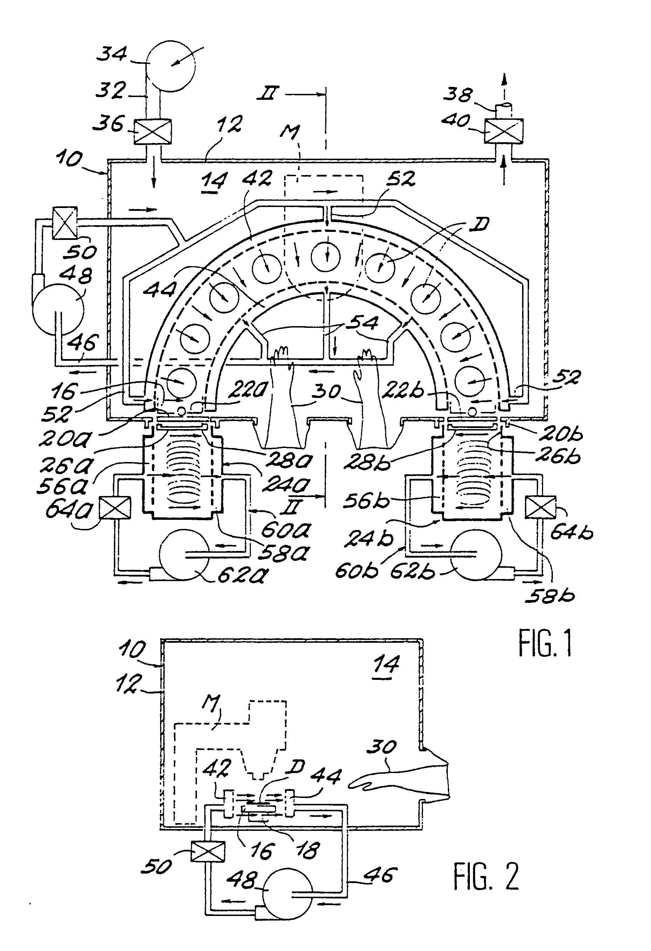

L'installation représentée sur les figures est destinée à être intégrée dans une installation de fabrication de microprocesseurs plus complexe, chacune des machines nécessaires à la fabrication et au contrôle des microprocesseurs étant de préférence placée dans un isolateur séparé tel que l'isolateur 10 sur les figures 1 et 2.

Cet isolateur 10 comprend une paroi 12 parfaitement étanche délimitant un volume clos 14, généralement parallélépipédique, dont les dimensions sont déterminées en fonction des dimensions de la machine M qui est placée dans l'isolateur. Cette machine M permet d'effectuer l'une des opérations nécessaires à la fabrication et au contrôle des microprocesseurs sur des disques de silicium D.

Afin de faire défiler automatiquement les disques de silicium D devant la machine M, les disques D sont placés sur un transporteur 16 situé à l'intérieur de l'isolateur 10 et dont le plan supérieur horizontal est perforé afin de maintenir les disques D au moyen d'un système à dépression (non représenté). L'avance pas-à-pas du transporteur 16 est commandée par un moteur 18 contrôlé par l'opérateur depuis l'extérieur de l'isolateur.

Les deux extrémités du transporteur 16 sont situées à proximité immédiate de deux ouvertures d'accès 20a et 20b délimitées par des brides circulaires dans la paroi 12 de l'isolateur. Les ouvertures 20a et 20b constituent respectivement une ouverture d'entrée et une ouverture de sortie pour les disques de silicium D. Ces ouvertures 20a et 20b sont normalement obturées de façon étanche par des portes 22a et 22b démontables depuis l'intérieur de l'isolateur.

Pour assurer le transport des disques de silicium D entre un isolateur (non représenté) situé en amont et permettant d'effectuer l'opération précédente et l'isolateur 12, on utilise un conteneur de transfert 24a. De même, le transfert des disques D de l'isolateur 12 dans un autre isolateur (non représenté) situé en aval et permettant d'effectuer l'opération suivante, est assuré par un conteneur de transport 24b.

En pratique, selon la cadence de fabrication, on peut également utiliser plusieurs conteneurs 24a et plusieurs conteneurs 24b ou, au contraire, un seul conteneur de transport à la place des conteneurs 24a et 24b.

Chacun des conteneurs de transport 24a et 24b comprend une paroi étanche délimitant un volume clos de petite dimension dans lequel peut être placé un casier recevant un certain nombre de disques de silicium D. A une extrémité, chaque conteneur 24a, 24b présente une ouverture 26a, 26b délimitée par une bride circulaire et normalement fermée de façon étanche par une porte 28a, 28b. La forme et les dimensions des ouvertures 26a, 26b sont identiques à celles des ouvertures 20a, 20b de l'isolateur.

D'une manière en elle-même connue, les brides délimitant les ouvertures 26a et 26b des conteneurs peuvent être fixées de façon étanche sur les brides délimitant les ouvertures 20a et 20b de l'isolateur.

Simultanément, les portes 28a et 28b des conteneurs sont également solidarisées des portes 22a et 22b de l'isolateur. En ouvrant les doubles portes ainsi formées, on fait alors communiquer le volume clos délimité par chacun des conteneurs avec le volume clos 14 délimité par l'isolateur 10, sans rompre l'étanchéité de ces différents volumes vis-à-vis de l'extérieur.

Cette manutention des doubles portes 22a et 28a et 22b et 28b est effectuée par l'intérieur de l'isolateur 10 à l'aide de moyens d'intervention constitués, dans l'exemple de réalisation représenté, par des gants 30 fixés de façon étanche sur la paroi 12 de l'isolateur. Ces moyens d'intervention permettent d'effectuer les manutentions nécessaires dans l'isolateur sans rompre l'étanchéité de sa paroi.

Lorsqu'il a ouvert les doubles portes, l'opérateur peut mettre en place les disques de silicium D contenus dans le conteneur 24a sur la partie du transporteur 16 adjacente à l'ouverture 20a, au fur et à mesure que le transporteur fait défiler les disques devant la machine M. Il peut aussi ranger les disques de silicium D traités ou contrôlés par la machine M dans le panier contenu dans le conteneur 24b, lorsqu'ils arrivent à proximité de l'orifice 20b.

Il est à noter que le trajet suivi par le transporteur 16 à l'intérieur de l'isolateur 10 est déterminé uniquement par les positions relatives des ouvertures d'entrée 20a et de sortie 20b et de la machine M. Pour faciliter la lecture de la figure 1, un trajet en arc de cercle a été représenté. Dans la pratique, le trajet défini par le transporteur 16 est de préférence rectiligne, les ouvertures 20a et 20b étant alors situées sur deux faces opposées de la paroi entre lesquelles est située la machine M.

D'une manière en elle-même classique, l'isolateur 10 est équipé d'un circuit ouvert de ventilation permettant d'amener de l'air neuf à l'intérieur du volume clos 14. Ce circuit comprend une conduite d'admission d'air 32 dont les extrémités débouchent respectivement à l'extérieur de l'isolateur et dans le volume clos 14. Cette conduite 32 est équipée d'un ventilateur 34 et d'un ou plusieurs filtre(s) 36 à haute efficacité. Le circuit de ventilation comprend également une conduite d'évacuation d'air 38 dont les extrémités débouchent respectivement dans le volume clos 14 et à l'extérieur de l'isolateur. Cette conduite 38 est également équipée d'un ou plusieurs filtre(s) à haute efficacité 40.

Comme on l'a expliqué dans le document antérieur FR-A-2578474, le circuit de ventilation qui vient d'être décrit permet d'assurer un renouvellement de l'air contenu dans le volume clos 14 limité à la seule quantité nécessitée par les conditions de travail telles que les variations du volume 14 inhérentes à l'exécution des tâches (par exemple lorsque l'opérateur retire ses mains des gants 30). Le renouvellement d'air assuré par ce circuit est en pratique toujours inférieur à 20 m$^3$/heure. Cependant, malgré la haute efficacité des filtres 36 et 40, ce circuit ne permet pas d'éliminer les particules émises par les différents appareils se trouvant à l'intérieur de l'isolateur 10.

Conformément à l'invention, afin d'éviter que ces particules ne puissent venir se coller sur les disques de silicium D à un endroit quelconque de leur trajet à l'intérieur de l'isolateur, celui-ci est également équipé d'un circuit fermé de recirculation d'air filtré.

Ce circuit de recirculation comprend une rampe de distribution d'air 42 et une rampe de récupération d'air 44. Ces deux rampes sont verticales parallèles entre elles, et disposées en vis-à-vis l'une de l'autre, de part et d'autre du transporteur 16 et à proximité immédiate de celui-ci. Les rampes 42 et 44 s'étendent sur toute la longueur du transporteur et sur une hauteur limitée à quelques centimètres au-dessus et en-dessous de la face supérieure du transporteur, comme le montre la figure 2.

Chacune des rampes 42 et 44 est constituée par une grille calibrée derrière laquelle est ménagé un passage de largeur constante, les grilles des deux rampes présentant approximativement les mêmes sections.

Le circuit fermé de recirculation d'air filtré comprend de plus une conduite de recirculation 46 dont les extrémités débouchent respectivement dans les rampes 42 et 44. Cette conduite 46 est équipée d'un surpresseur 48 et d'au moins un filtre à haute efficacité 50. Comme l'illustre la figure 1, le raccordement de la conduite 46 sur chacune des rampes 42 et 44 est assuré au moyen de plusieurs buses 52 et 54 respectivement. Les buses 52 et 54 sont régulièrement réparties le long des rampes 42 et 44 afin d'assurer un flux d'air relativement uniforme entre les rampes 42 et 44.

Etant donné que la hauteur des rampes 42 et 44 est limitée, un débit d'air très important peut être créé entre les rampes. En pratique, ce débit est compris entre environ 1 m/s et environ 2 m/s. Ce débit très rapide crée une barrière dynamique qui évite aux particules éventuelles de se déposer dans le cheminement des disques de silicium D.

Pour éviter que des particules se déposent sur les disques de silicium D lors de leur transport entre deux isolateurs, chacun des conteneurs de transport 24a et 24b est également équipé d'un circuit fermé de recirculation d'air filtré. Comme le circuit qui vient d'être décrit, chacun de ces circuits comprend deux rampes en vis-à-vis 56a, 58a et 56b et 58b respectivement. Ces rampes sont disposées dans chaque conteneur 24a, 24b de part et d'autre du volume clos délimité par la paroi de ce conteneur, en vis-à-vis l'une de l'autre et sur toute la longueur du conteneur, de façon à assurer un balayage du volume contenant le panier portant les disques de silicium par un flux d'air très rapide. A cet effet, les rampes 56a, 58a et 56b et 58b de chaque conteneur sont reliées par une conduite 60a, 60b équipée d'un surpresseur 62a, 62b et d'au moins un filtre à haute efficacité 64a, 64b.

Le circuit de recirculation d'air filtré associé à la cellule 10, de même que les circuits de recirculation d'air filtré associés à chacun des conteneurs, fonctionnent en permanence lorsque des disques de silicium sont présents dans l'isolateur ou dans les conteneurs. De cette manière, tout dépôt de particules sur les disques est pratiquement empêché, ce qui confère à l'installation des performances très supérieures à celles des installations existantes et permet de réduire de façon très sensible les déchets lors de la fabrication des microprocesseurs.

Comme on l'a mentionné précédemment, une installation ayant un agencement comparable peut aussi être utilisée dans l'industrie pharmaceutique pour effectuer des opérations telles que le remplissage hors poussière de flacons. Seules la nature des produits et la structure des machines sont alors différentes.

## Revendications

1. Installation pour travaux hors poussière, comprenant un isolateur (10) pourvu d'une paroi étanche (12) délimitant un volume clos de travail (14) ; des moyens (30) d'intervention à l'intérieur de ce volume sans rupture d'étanchéité de la paroi ; un circuit ouvert d'admission d'air neuf dans l'isolateur, comportant une conduite d'admission d'air (32) équipée de moyens de ventilation (34) et de moyens de filtration (36) et une conduite d'évacuation d'air (38) équipée de moyens de filtration (40), chacune de ces conduites ayant deux extrémités qui débouchent respectivement dans le volume clos (14) et à l'extérieur de celui-ci ; cette installation étant caractérisée en ce qu'elle comprend de plus un transporteur (16) apte à déplacer des produits (D) selon un trajet donné à l'intérieur de l'isolateur, entre deux ouvertures d'accès (20a, 20b) formées dans la paroi (12) et normalement obturées de façon étanche par des portes (22a, 22b), en passant devant au moins une machine (M) ; au moins un conteneur de transport étanche (24a, 24b) pourvu d'une ouverture (26a, 26b) apte à être raccordée de façon étanche sur l'une desdites ouvertures d'accès et normalement obturée de façon étanche par une porte (28a, 28b) ; un circuit fermé de recirculation d'air filtré associé à l'isolateur, comportant deux rampes (42, 44) approximativement de même section, disposées en vis-à-vis l'une de l'autre de part et d'autre du transporteur (16) sur toute la longueur dudit trajet, et reliées par une conduite de recirculation (46) équipée d'un surpresseur (48) et de moyens de filtration (50) ; et un circuit fermé de recirculation d'air filtré associé au conteneur, comportant deux autres rampes (56a, 58a ; 56b ; 58b) approximativement de même section, disposées en vis-à-vis l'une de l'autre de part et d'autre d'un volume clos formé à l'intérieur du conteneur, et reliées par une conduite de recirculation (60a, 60b) équipée d'un surpresseur (62a, 62b) et de moyens de filtration (64a, 64b).

## Patentansprüche

1. Vorrichtung zum Arbeiten in staubfreier Umgebung mit einer Isolationskammer (10), die mit einer staubdichten Wand (12) versehen ist, die einen geschlossenen Arbeitsraum (14) begrenzt ; mit Vorrichtungen (30) zum Eingreifen in das Innere dieses Raums, ohne die Staubdichtigkeit der Wand zu unterbrechen ; mit einem offenen Kreis für die Frischluftzufuhr in die Isolationskammer, welcher eine Luftzuführleitung (32), die mit Ventilations- (34) und Filtereinrichtungen (36) versehen ist, und eine Luftabführleitung (38) mit einer Filtereinrichtung (40) aufweist, wobei jede der Leitungen zwei Endbereiche hat, die jeweils in dem geschlossenen Raum (14) bzw. an dessen Außenseite enden ; wobei diese Vorrichtung dadurch gekennzeichnet ist, daß sie wenigstens eine Transportvorrichtung (16), die Gegenstände (D) auf einer vorgegebenen Bahn im Inneren der Isolationskammer zwischen zwei Zugangsöffnungen (20a, 20b), die in der Wand (12) ausgebildet und normalerweise in staubdichter Weise durch Türelemente (22a, 22b) verschlossen sind, so verschieben kann, daß sie sich an wenigstens einer Maschine (M) vorbeibewegen ; wenigstens einen staubdichten Transportbehälter (24a, 24b), der mit einer Öffnung (26a, 26b) versehen ist, mit der er in staubdichter Weise mit einer der Zugangsöffnungen verbunden werden kann und die normalerweise in staubdichter Weise durch ein Türelement (28a, 28b) verschlossen ist ; einen geschlossenen Rückführungskreis für gefilterte Luft, welcher mit der Isolationskammer in Verbindung steht und zwei Führungselemente (42, 44) mit annähernd gleichem Querschnitt aufweist, die einander zugewandt und gegenüberliegend auf beiden Seiten der Transportvorrichtung (16) über die gesamte Länge der Bahn angeordnet und über eine Rückführungsleitung (46), die eine Sperre (48) und eine Filtereinrichtung (50) aufweist, verbunden sind ; und einen geschlossenen Rückführungskreis für gefilterte Luft aufweist, welcher mit der dem Behälter in Verbindung steht und zwei weitere Führungselemente (56a, 58a ; 56b ; 58b) mit annähernd gleichem Querschnitt aufweist, die einander zugewandt und gegenüberliegend auf beiden Seiten eines im Inneren des Behälters gebildeten geschlossenen Bereichs angeordnet und über eine Rückführungsleitung (60a, 60b) verbunden sind, die eine Sperre (62a, 62b) und eine Filtereinrichtung (64a, 64b) aufweist.

## Claims

1. Installation for dust-free work, comprising an isolator (10) equipped with a sealing wall (12) delimiting a closed working volume (14) ; means (30) for performing acts within this volume without a break in the sealing of the wall ; an open circuit for the inlet of fresh air into the isolator, comprising an air-inlet pipe (32) equipped with ventilation means (34) and with filtration means (36) and an air-discharge pipe (38) equipped with filtration means (40), each of these pipes having two ends which open respectively into the closed volume (14) and onto the outside of the latter ; this installation being characterised in that it comprises, furthermore, a conveyor (16) capable of displacing products (D) along a given path within the isolator between two access orifices (28, 20b) formed in the wall (12) and normally shut off sealingly by doors (22a, 22b), at the same time passing in front of at least one machine (M) ; at least one sealed transport container (24a, 24b) provided with an orifice (26a, 26b) capable of being connected sealingly to one of the said access orifices and normally shut off sealingly by a door (28a, 28b) ; a closed filtered-air recirculation circuit associated with the isolator and comprising two banks (42, 44) approximately of the same cross-section and arranged opposite each other on either side of the conveyor (16) over the entire length of the said path and connected by a recirculation pipe (46) equipped with a booster (48) and with filtration means (50) ; and a closed filtered-air recirculation circuit associated with the container and comprising two other banks (56a, 58a ; 56b ; 58b) approximately of the same cross-section, arranged opposite each other on either side of a closed volume formed within the container, and connected by a recirculation pipe (60a, 60b) equipped with a booster (62a, 62b) and with filtration means (64a, 64b).

FIG. 1

FIG. 2